# EUROPEAN PATENT APPLICATION

(11) **EP 3 346 166 A1**
(43) Date of publication of application: **11.07.2018**
(21) Application number: 18150160.2
(22) Date of filing: 03.01.2018
(51) Int. Cl.: F16H 57/039, F16H 1/16, F16H 57/02

(54) **CAM DEVICE AND METHOD FOR MANUFACTURING CAM DEVICE**

(30) Priority: 05.01.2017 JP 2017000562
(71) Applicant: Techno Dynamics Inc., Kikugawa-shi, Shizuoka 439-0031 (JP)
(72) Inventor: KATO, Toshinao, SHIZUOKA, 439-0031 (JP)
(74) Representative: Santarelli

(57) **Abstract**

A cam device includes: a cam unit, a reduction unit and a housing. The cam unit includes a rotating body and a cam. The rotating body includes a cam follower. The cam includes a cam surface that engages with the cam follower, and the cam is configured to rotate the rotating body by rotation of the cam. The reduction unit is provided between a motor and the cam, and includes a motor gear and a cam gear. The motor gear is mounted on a motor side of the reduction unit. The cam gear is mounted on a cam side of the reduction unit. The housing includes a first housing part and a second housing part as a unit. The first housing part accommodates the cam unit, and the second housing part accommodates the reduction unit.

## Description

The present application claims priority from Japanese Patent Application No. 2017-000562 filed on January 5, 207, which is herein incorporated by reference.

### BACKGROUND

### Technical Field

The invention relates to a cam device and a method for manufacturing a cam device.

### Related Art

A cam is already a well-known machine element. This cam is widely used and employed in various devices (cam devices) (for example, Japanese Unexamined Patent Application Publication No. 2005-118946).

Such cam devices include a cam device that includes a cam unit, a reduction unit, and a housing. The cam unit includes a rotating body and a cam. The rotating body includes a cam follower. The cam includes a cam surface that engages with the cam follower, and the cam is configured to rotate the rotating body by rotation of the cam. The reduction unit is provided between a motor and the cam, and includes a motor gear and a cam gear. The motor gear is mounted on a motor side of the reduction unit. The cam gear is mounted on a cam side of the reduction unit.

Regarding such cam device, there is the demand for a low-cost device having a reduced size and weight.

### SUMMARY OF INVENTION

The present invention has been made in consideration of such object. An object of the present invention is to achieve a compact, low-cost cam device.

An aspect of the invention to achieve the above advantage is a cam device, including:
a cam unit that includes a rotating body and a cam,
   the rotating body including a cam follower,
   the cam including a cam surface that engages with the cam follower,
   the cam configured to rotate the rotating body by rotation of the cam;
a reduction unit
   that is provided between a motor and the cam and
   that includes a motor gear and a cam gear,
      the motor gear being mounted on a motor side of the reduction unit,
      the cam gear being mounted on a cam side of the reduction unit; and
a housing that includes a first housing part and a second housing part as a unit,
   the first housing part accommodating the cam unit,
   the second housing part accommodating the reduction unit.

Other features of the present invention will be made clear by the description and attached drawings.

### BRIEF DESCRIPTION OF DRAWINGS

Fig. 1 is a cross-sectional view of a high-reduction cam device 10.
Fig. 2 is a perspective view of a housing 40.
Fig. 3 is a cross-sectional view of the housing 40.
Fig. 4 is a cross-sectional view of a low-reduction cam device 110.
Fig. 5 is a cross-sectional view of a conventional high-reduction cam device 210.

### DESCRIPTION OF THE EXEMPLARY EMBODIMENTS

At least the following matters are made clear from the description and attached drawings.

A cam device, including:
a cam unit that includes a rotating body and a cam,
   the rotating body including a cam follower,
   the cam including a cam surface that engages with the cam follower,
   the cam configured to rotate the rotating body by rotation of the cam;
a reduction unit
   that is provided between a motor and the cam and
   that includes a motor gear and a cam gear,
      the motor gear being mounted on a motor side of the reduction unit,
      the cam gear being mounted on a cam side of the reduction unit; and
a housing that includes a first housing part and a second housing part as a unit,
   the first housing part accommodating the cam unit,
   the second housing part accommodating the reduction unit.

Such a cam device ensures achieving a compact, low-cost cam device.

In such a cam device, it is also acceptable
that the motor gear is mounted on a motor gear shaft connected to the motor,
the motor facing the motor gear in an axial direction of the motor,
that the cam device further comprises a bearing that is for supporting the motor gear shaft, and
that the bearing supports the motor gear shaft and the motor gear.

Such a cam device ensures accurately aligning the centers (rotation axes) of the motor gear and the motor gear shaft.

A cam device, including:
a cam unit that includes a rotating body and a cam,
   the rotating body including a cam follower,
   the cam including a cam surface that engages with the cam follower,
   the cam configured to rotate the rotating body by rotation of the cam;
a coupling
   that is provided between a motor and the cam and
   that is for coupling the motor and the cam; and
a housing that includes a first housing part and a second housing part as a unit,
   the first housing part accommodating the cam unit,
   the second housing part accommodating the coupling.

Such a cam device ensures achieving a compact, low-cost cam device.

In such a cam device, it is also acceptable
that the first housing part is rectangular when viewed from an axial direction of rotation of the rotating body, and
that the second housing part is constituted by an extending part that extends from the first housing part outwards in an axial direction of rotation of the cam.

Such a cam device makes it easier to accommodate the reduction unit and the coupling in the second housing part.

A method for manufacturing a cam device,
the method being for manufacturing selectively a cam device having a high reduction ratio and a cam device having a low reduction ratio,
the method including:
accommodating a cam unit in a first housing part of a housing,
   the cam unit including a rotating body and a cam,
      the rotating body including a cam follower,
      the cam including a cam surface that engages with the cam follower,
      the cam configured to rotate the rotating body by rotation of the cam,
   the housing including the first housing part and a second housing part as a unit; and
when manufacturing the cam device having the high reduction ratio,
connecting a reduction unit to the cam unit with being accommodated in the second housing part,
   the reduction unit being provided between a motor and the cam and
   the reduction unit including a motor gear and a cam gear,
      the motor gear being mounted on a motor side of the reduction unit,
      the cam gear being mounted to on a cam side of the reduction unit; and
when manufacturing the cam device having the low reduction ratio,
connecting a coupling to the cam unit with being accommodated in the second housing part,
   the coupling being provided between a motor and the cam and
   the coupling being for coupling the motor and the cam.

Such method for manufacturing a cam device ensures achieving a compact, low-cost cam device.

In such a method for manufacturing a cam device, it is also acceptable
that the first housing part is rectangular when viewed from an axial direction of rotation of the rotating body, and
that the second housing part is constituted by an extending part that extends from the first housing part outwards in an axial direction of rotation of the cam.

Such method for manufacturing a cam device makes it easier to accommodate the reduction unit and the coupling in the second housing part.

### Cam Device

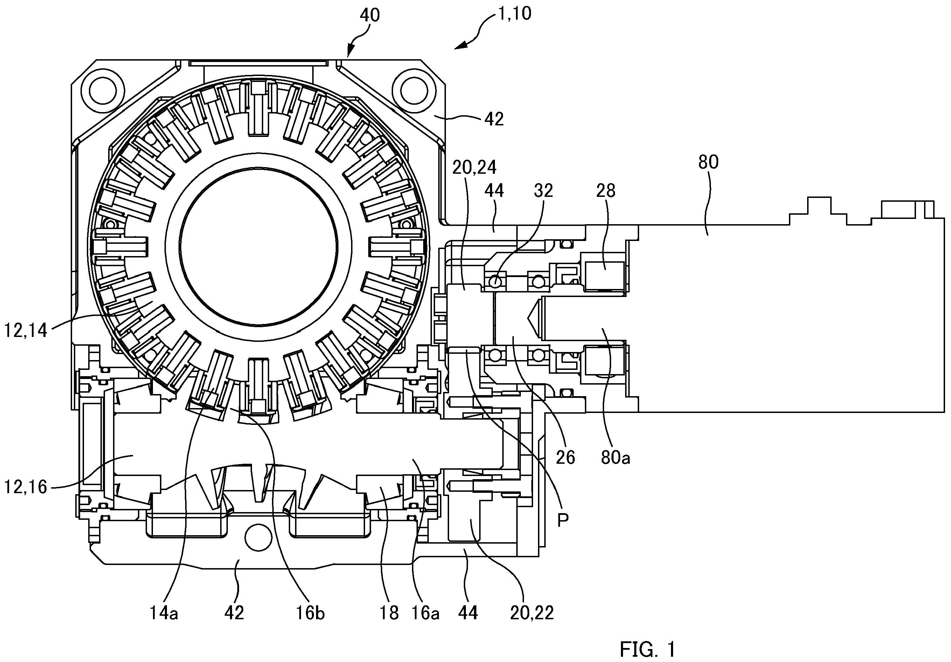

Next, a cam device will be described with reference to Figs. 1 to 4. Here, as the cam device, a cam device having a high reduction ratio (referred to as a high-reduction cam device 10 for convenience) and a cam device having a low reduction ratio (referred to as a low-reduction cam device 110 for convenience) will be described. While details will be described later, the high-reduction cam device 10 and the low-reduction cam device 110 have some components that are common in both the devices. Accordingly, both the devices are easily and selectively manufacturable by attaching a replaceable unique component to these commonized components.

### High-reduction Cam Device 10

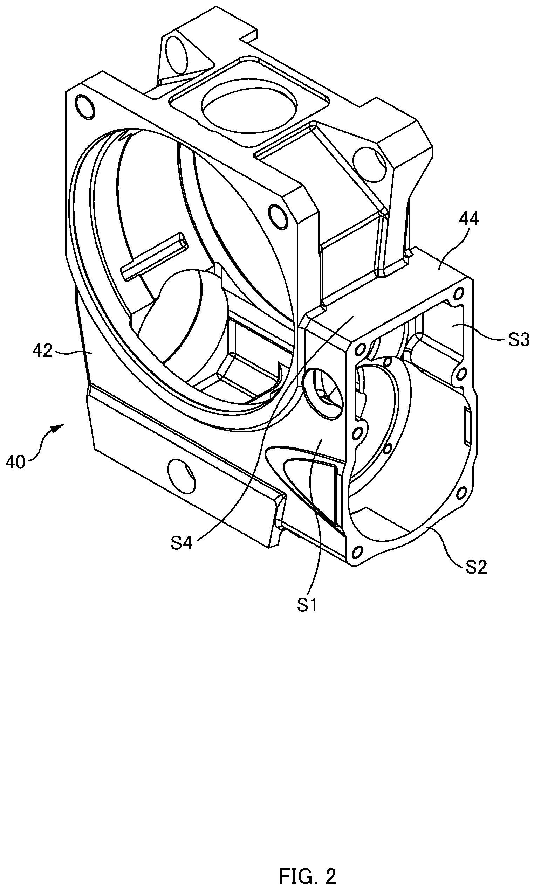

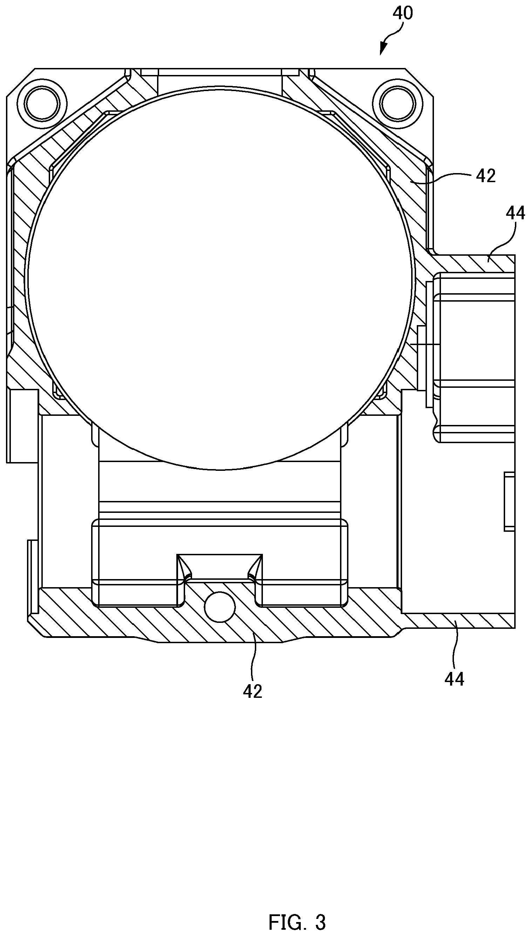

First, the high-reduction cam device 10 will be described with reference to Figs. 1 to 3. Fig. 1 is a cross-sectional view of the high-reduction cam device 10. Fig. 2 is a perspective view of a housing 40. Fig. 3 is a cross-sectional view of the housing 40.

The high-reduction cam device 10 includes a cam unit 12, a reduction unit 20, a motor gear shaft 26, a motor gear bearing 32 (corresponding to a bearing), and the housing 40.

The cam unit 12 includes an output rotation table 14 (corresponding to the rotating body), a roller gear cam 16 (corresponding to the cam) and a cam bearing 18.

The output rotation table 14 is a table that rotates about a rotation axis and outputs a position in a direction of rotation. As an example, this output rotation table 14 holds a workpiece. This output rotation table 14 is a cylindrical member. This output rotation table has an outer periphery on which a plurality of cam followers 14a are disposed equally spaced so as to circumferentially align.

The roller gear cam 16 is configured to rotate the output rotation table 14 by rotation of the roller gear cam 16. This roller gear cam 16 is positioned radially outside the output rotation table 14. The roller gear cam 16 includes a cam shaft 16a and cam surfaces 16b; the cam surfaces 16b are disposed in the center of this cam shaft 16a in an axial direction, and engage with the cam followers 14a. Accordingly, the rotation of the roller gear cam 16 transmits a rotational force of the roller gear cam 16 to the output rotation table 14 through the cam surfaces 16b and the cam followers 14a. Consequently, the output rotation table 14 rotates about the rotation axis. The roller gear cam 16 (the cam shaft 16a) is rotatably supported by the bearing (referred to as the cam bearing 18 for convenience).

The reduction unit 20 is provided between a motor 80 and the roller gear cam 16. The reduction unit 20 includes two gears (a gear on a cam side is referred to as a cam gear 22 and a gear on a motor side is referred to as a motor gear 24 for convenience).

The cam gear 22 is a gear mounted on (secured to) a distal end portion of the cam shaft 16a of the roller gear cam 16 in the axial direction. This makes the roller gear cam 16 and the cam gear 22 rotate as a unit.

Meanwhile, the motor gear 24 is a gear mounted on the motor gear shaft 26 connected to the motor 80. This makes the motor 80 and the motor gear 24 rotate as a unit.

The cam gear 22 and the motor gear 24 mesh (a meshing position is indicated by a reference character P). Accordingly, the rotation of the motor 80 transmits driving force of the motor 80 to the roller gear cam 16 through the motor gear shaft 26, through the motor gear 24, and through the cam gear 22. Consequently, the roller gear cam 16 (the cam shaft 16a) rotates.

The motor 80 is a driving source to rotate the output rotation table 14. The motor 80 is mounted on (secured to) the motor gear shaft 26 with a fastening member 28 while a distal end portion 80a of the motor 80 being fitted with the motor gear shaft 26. The motor gear shaft 26 faces the motor gear 24 in an axial direction of the motor 80. In such a state, the motor gear 24 is bolt fastened to the motor gear shaft 26, to be mounted on (secured to) the motor gear shaft 26.

While the high-reduction cam device 10 includes the motor gear bearing 32 for supporting the motor gear shaft 26, this motor gear bearing 32 straddles and supports not only the motor gear shaft 26 but also the motor gear 24. That is, the motor gear 24 and the motor gear shaft 26 face one another, and the motor gear bearing 32 straddles the gear 24 and the shaft 26 and is disposed in a position to support simultaneously both of them. This makes it possible to align the center (the rotation axis) of the motor gear 24 to the center (the rotation axis) of the motor gear shaft 26 not only by bolt fastening but also using the motor gear bearing 32. That is, the motor gear bearing 32 has not only a function of supporting the shaft but also a function of aligning the center of the motor gear 24 to the center of the motor gear shaft 26, and this makes it possible to accurately align the center of the motor gear 24 to the center of the motor gear shaft 26.

In this embodiment, the motor 80 is not included in the high-reduction cam device 10 when a supplier delivers the cam device 10 to a user. The motor 80 can be prepared separately and be mounted on the high-reduction cam device 10 by the user, the supplier or the like. However, the present invention is not limited thereto, and the motor 80 may be originally included in the high-reduction cam device 10.

The housing 40 is for accommodating the cam unit 12 and the reduction unit 20. This housing 40 includes two housing parts (referred to as a first housing part 42 and a second housing part 44 for convenience) as illustrated in Figs. 2 and 3.

The first housing part 42 is a part for accommodating the cam unit 12 (namely, the output rotation table 14, the roller gear cam 16, and the cam bearing 18). As illustrated in Fig. 3, this first housing part 42 is rectangular when viewed from an axial direction of the rotation of the output rotation table 14 (that is, when viewed from above in Fig. 3). The cam unit 12 is accommodated in this rectangular first housing part 42.

In this description, the term "accommodate" does not necessarily mean that the whole is completely accommodated within and is a concept encompassing a partial protrusion from the housings. In this embodiment, as illustrated in Fig. 1, a distal end portion of the cam shaft 16a of the roller gear cam 16 slightly protrudes from the first housing part 42 to reach the second housing part 44.

The second housing part 44 is a part for accommodating the reduction unit 20 (namely, the cam gear 22 and the motor gear 24). This second housing part 44 is constituted by an extending part that extends from the first housing part 42 outwards in the axial direction of the rotation of the roller gear cam 16. As illustrated in Fig. 2, the second housing part 44 is rectangular when viewed from the axial direction of the rotation of the roller gear cam 16. The extending part has four sides (these four sides are indicated as reference characters S1 to S4 in Fig. 2) of this rectangular. Then, the reduction unit 20 is accommodated in a space surrounded by these four sides.

In this embodiment, as illustrated in Fig. 2, the first housing part 42 and the second housing part 44 are provided as a unit (that is, the first housing part 42 and the second housing part 44 are provided in one body in a non-separable manner). That is, the first housing part 42 and the second housing part 44 are formed of a single frame.

In the high-reduction cam device 10 according to this embodiment, the reduction unit 20 reduces the speed of rotation of the motor 80 to 1/3 (the speed of rotation of the roller gear cam 16 becomes 1/3 of the speed of rotation of the motor 80). Furthermore, due to an effect of the cam surfaces 16b, the speed of rotation of the roller gear cam 16 is reduced to 1/20 (the speed of rotation of the output rotation table 14 becomes 1/20 of the speed of rotation of the roller gear cam 16).

Thus, in the high-reduction cam device 10, reduction of 1/60 in total is achieved. Therefore, the high-reduction cam device 10 can increase torque compared with the low-reduction cam device 110 (reduction of 1/20; to be described later). This high-reduction cam device 10 is appropriate for a usage that requires a large torque.

### Low-reduction Cam Device 110

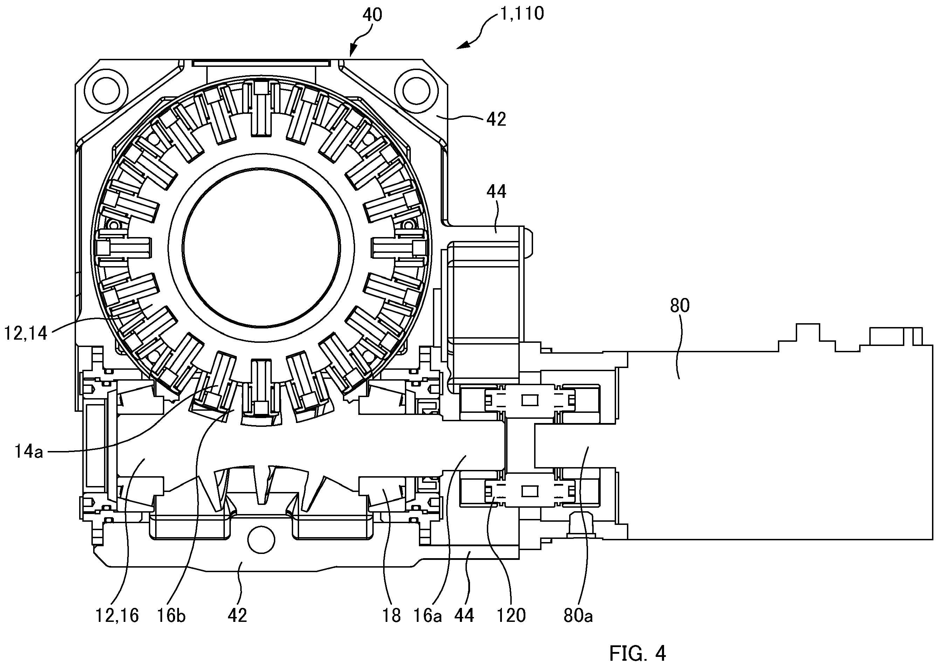

Next, the low-reduction cam device 110 will be described with reference to Figs. 2 to 4. Fig. 4 is a cross-sectional view of the low-reduction cam device 110.

The low-reduction cam device 110 includes a cam unit 12, a coupling 120, and the housing 40.

The cam unit 12 is identical to the cam unit 12 in the high-reduction cam device 10. That is, the cam unit 12 includes a output rotation table 14 (corresponding to the rotating body), a roller gear cam 16 (corresponding to the cam), and a cam bearing 18.

The output rotation table 14 is the table that rotates about a rotation axis and outputs a position in the direction of rotation. As an example, the output rotation table 14 holds the workpiece. This output rotation table 14 is the cylindrical member. This output rotation table has the outer periphery on which a plurality of cam followers 14a are disposed equally spaced so as to circumferentially align.

The roller gear cam 16 is configured to rotate the output rotation table 14 by rotation of the roller gear cam 16. This roller gear cam 16 is positioned radially outside the output rotation table 14. The roller gear cam 16 includes a cam shaft 16a and cam surfaces 16b; the cam surfaces 16b are disposed in the center of the cam shaft 16a in the axial direction, and engage with the cam followers 14a. Accordingly, the rotation of the roller gear cam 16 transmits a rotational force of the roller gear cam 16 to the output rotation table 14 through the cam surfaces 16b and the cam followers 14a. Consequently, the output rotation table 14 rotates about the rotation axis. The roller gear cam 16 (the cam shaft 16a) is rotatably supported by the bearing (referred to as the cam bearing 18 for convenience).

The coupling 120 is provided between the motor 80 and the roller gear cam 16. The coupling 120 is for coupling the motor 80 and the roller gear cam 16. The distal end portion of the cam shaft 16a of the roller gear cam 16 is secured to the coupling 120, and also the distal end portion 80a of the motor 80 is secured to the coupling 120. Thus, the coupling 120 couples the motor 80 and the roller gear cam 16.

The motor 80 is the driving source to rotate the output rotation table 14. In this embodiment, similarly to the high-reduction cam device 10, the motor 80 is not included in the low-reduction cam device 110 when a supplier delivers the low-reduction cam device 110 to a user. The motor 80 can be prepared separately and be mounted on the low-reduction cam device 110 by the user, the supplier or the like. However, the present invention is not limited thereto, and the motor 80 may be originally included in the low-reduction cam device 110.

The housing 40 is for accommodating the cam unit 12 and the coupling 120. This housing 40 includes the two housing parts (referred to as the first housing part 42 and the second housing part 44 for convenience) as illustrated in Figs. 2 and 3.

The first housing part 42 is a part for accommodating the cam unit 12 (namely, the output rotation table 14, the roller gear cam 16, and the cam bearing 18). As illustrated in Fig. 3, this first housing part 42 is rectangular when viewed from the axial direction of the rotation of the output rotation table 14 (that is, when viewed from above in Fig. 3). The cam unit 12 is accommodated in this rectangular first housing part 42.

In this description, the term "accommodate" does not necessarily mean that the whole is completely accommodated within and is a concept encompassing a partial protrusion from the housings. In this embodiment, as illustrated in Fig. 1, the distal end portion of the cam shaft 16a of the roller gear cam 16 slightly protrudes from the first housing part 42 to reach the second housing part 44.

The second housing part 44 is a part for accommodating the coupling 120. This second housing part 44 is constituted by the extending part that extends from the first housing part 42 outwards in the axial direction of the rotation of the roller gear cam 16. As illustrated in Fig. 2, the second housing part 44 is rectangular when viewed from the axial direction of the rotation of the roller gear cam 16. The extending part has the four sides (these four sides are indicated as the reference characters S1 to S4 in Fig. 2) of this rectangular. Then, the coupling 120 is accommodated in the space surrounded by the four sides.

In this embodiment, as illustrated in Fig. 2, the first housing part 42 and the second housing part 44 are provided as a unit (that is, the first housing part 42 and the second housing part 44 are provided in one body in a non-separable manner). That is, the first housing part 42 and the second housing part 44 are formed of a single frame.

In the low-reduction cam device 110 according to this embodiment, the reduction by the reduction unit 20, which is included in the high-reduction cam device 10, is not provided. Accordingly, reduction by the low-reduction cam device is 1/20 in total. However, this solves a problem of backlash that the reduction unit 20 has and which is slight but not negligible. Consequently, high accuracy is achieved. This low-reduction cam device 110 is appropriate for a usage that requires the high accuracy.

### Effectivity according to Above-Described Cam Device

When the above-described high-reduction cam device and the low-reduction cam device are manufactured selectively according to user's needs (the high torque or the high accuracy), the following method has been executed conventionally.

First, a cam unit which is accommodated in a housing for the cam unit (corresponding to the first housing part 42) is manufactured. Then, when manufacturing the high-reduction cam device, a housing for a reduction unit (corresponding to the second housing part 44) is mounted on this housing for the cam unit with bolts or the like. Thus, the reduction unit is connected to the cam unit with being accommodated in the housing for the reduction unit. On the other hand, when manufacturing the low-reduction cam device, a housing for a coupling, which is different from the housing for the reduction unit, is mounted on the housing for the cam unit with bolts or the like. Thus, the coupling is connected to the cam unit with being accommodated in this housing for the coupling.

Accordingly, in neither of the high-reduction cam device and the low-reduction cam device, the housing corresponding to the first housing part 42 has been integrated as a unit with the housing corresponding to the second housing part 44. That is, in the high-reduction cam device, the housing for the cam unit and the housing for the reduction unit have been separate; and in the low-reduction cam device, the housing for the cam unit and the housing for the coupling have been separate.

This has caused the following problems in the high-reduction cam device and the low-reduction cam device. The first problem is high production cost caused by separately manufacturing the housing for the reduction unit and the housing for the coupling.

The second problem is increase of size and weight of the cam device; this is because the housing for the reduction unit (or for the coupling) is mounted on the housing for the cam unit.

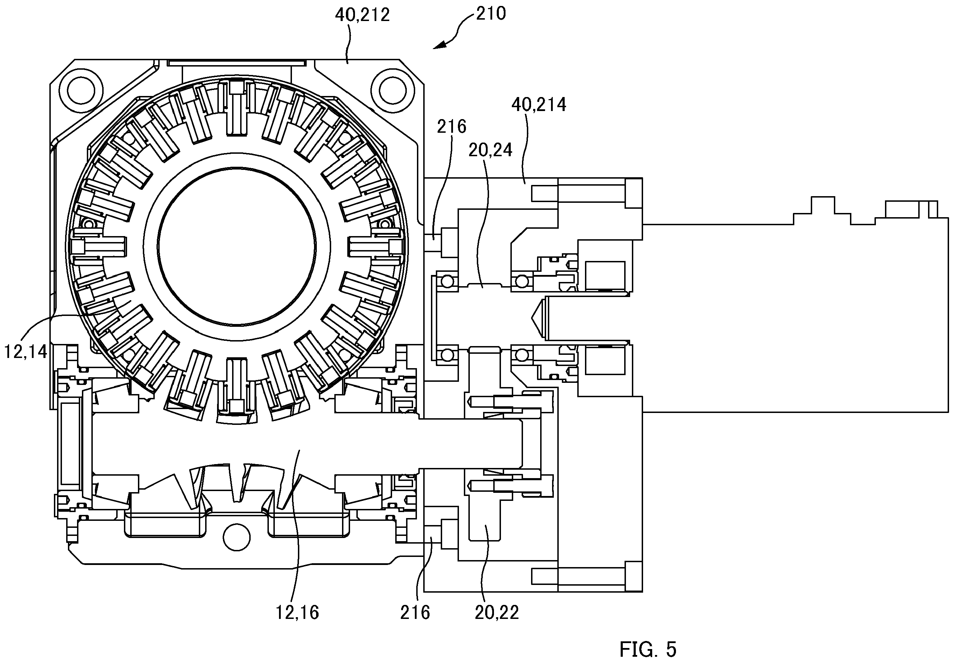

With reference to Fig. 5, one example will be described in this respect. Fig. 5 is a cross-sectional view of a conventional high-reduction cam device 210. The conventional high-reduction cam device 210 illustrated in Fig. 5, similarly to the high-reduction cam device 10 according to this embodiment, includes the cam unit 12, the reduction unit 20, and the housing 40. The cam unit 12 includes the output rotation table 14 and the roller gear cam 16. The reduction unit 20 includes the cam gear 22 and the motor gear 24. However, unlike the high-reduction cam device 10, the housing for the cam unit (referred to as a cam unit housing 212) and the housing for the reduction unit (referred to as a reduction unit housing 214) are separate. Accordingly, the reduction unit housing 214 has to be mounted on the cam unit housing 212 with a bolt 216. In this case, in order to increase rigidity at a position where the bolt is mounted, the housing has to be thickened. This increases the size and the weight of the high-reduction cam device 210.

In another example, it is necessary to seal between the housing for the cam unit and the housing for the reduction unit so as to prevent lubricating oil in the reduction unit from leaking. In this case, an O-ring or similar part is provided between the housings, and this increases the size and the weight of the high-reduction cam device.

Here, there is provided a method for manufacturing the cam device according to this embodiment; the method is for selectively manufacturing the cam device having a high reduction ratio (the high-reduction cam device 10) and the cam device having a low reduction ratio (the low-reduction cam device 110). The method includes: a step of accommodating the cam unit 12 in the first housing part 42 of the housing 40; and when manufacturing the high-reduction cam device 10, a step of connecting the reduction unit 20 to the cam unit 12 with being accommodated in the second housing part 44, or when manufacturing the low-reduction cam device 110, a step of connecting the coupling 120 to the cam unit 12 with being accommodated in the second housing part 44. The cam unit 12 includes the output rotation table 14 and the roller gear cam 16. The output rotation table 14 includes the cam follower 14a. The roller gear cam 16 includes the cam surface 16b that engages with the cam follower 14a, and the cam 16 is configured to rotate the output rotation table 14 by the rotation of the roller gear cam 16. The housing 40 includes the first housing part 42 and the second housing part 44 as a unit. The reduction unit 20 includes the motor gear 24 and the cam gear 22, the motor gear 24 being mounted on the motor 80 side of the reduction unit 20, the cam gear 22 being mounted on the roller gear cam 16 side of the reduction unit 20. The coupling 120 is provided between the motor 80 and the roller gear cam 16, the coupling 120 being for coupling the motor 80 and the roller gear cam 16.

The cam device according to this embodiment (the high-reduction cam device 10) includes: the cam unit 12; the reduction unit 20; and the housing 40. The cam unit 12 includes the output rotation table 14 and the roller gear cam 16. The output rotation table 14 includes the cam follower 14a. The roller gear cam 16 includes the cam surface 16b that engages with the cam follower 14a, and is configured to rotate the output rotation table 14 by the rotation of the roller gear cam 16. The reduction unit 20 is provided between the motor 80 and the roller gear cam 16, and includes the motor gear 24 and the cam gear 22. The motor gear 24 is mounted on the motor 80 side of the reduction unit 20. The cam gear 22 is mounted on the roller gear cam 16 side of the reduction unit 20. The housing 40 includes the first housing part 42 and the second housing part 44 as a unit. The first housing part 42 accommodates the cam unit 12. The second housing part 44 accommodates the reduction unit 20.

The cam device according to this embodiment (the low-reduction cam device 110) includes the cam unit 12, the coupling 120, and the housing 40. The cam unit 12 includes the output rotation table 14 and the roller gear cam 16. The output rotation table 14 includes the cam follower 14a. The roller gear cam 16 includes the cam surface 16b that engages with the cam follower 14a, and is configured to rotate the output rotation table 14 by the rotation of the roller gear cam 16. The coupling 120 is provided between the motor 80 and the roller gear cam 16, and is for coupling the motor 80 and the roller gear cam 16. The housing 40 includes the first housing part 42 and the second housing part 44 as a unit. The first housing part 42 accommodates the cam unit 12. The second housing part 44 accommodates the coupling 120.

That is, in this embodiment, the second housing part 44, which is common between the housing for the reduction unit and the housing for the coupling, is provided as a unit with the first housing part 42.

This eliminates the need for separately manufacturing the housing for the reduction unit and the housing for the coupling, and this makes it possible to reduce the production cost of the cam device.

Providing the first housing part 42 and the second housing part 44 as a unit eliminates the need for mounting the housing for the reduction unit (or for the coupling) on the housing for the cam unit. This solves the foregoing problem that the size and weight of the cam device increase.

In addition, it is possible to omit installation procedures for the bolt, the O-ring, and similar part for mounting. This simplifies the production of the cam device.

Thus, this embodiment ensures achieving a compact (that is, the size and the weight are reduced) and low-cost cam device.

### Other Embodiments

While the cam device according to the present invention has been described above based on the above-mentioned embodiment, the above-mentioned embodiment of the present invention is simply for facilitating the understanding of the present invention and is not in any way to be construed as limiting the present invention. The present invention may variously be changed or altered without departing from its spirit and surely encompasses equivalents thereof.

In the above-described embodiment, the first housing part 42 is rectangular when viewed from the axial direction of the rotation of the output rotation table 14, and the second housing part 44 is constituted by the extending part that extends from the first housing part 42 outwards in the axial direction of the rotation of the roller gear cam 16. However, the configuration (structure) of the first housing part 42 and the second housing part 44 of the housing 40 is not limited to this.

But, if the extending part constituting the second housing part 44 extends in an integrated manner from the rectangular, first housing part 42 outwards in the axial direction of the rotation of the roller gear cam 16, it is possible to makes it easier to accommodate in the second housing part 44 the reduction unit 20 and the coupling 120 which are disposed in the distal end portion of the roller gear cam 16. In this point, the above-described embodiment is preferred.

## Claims

1. A cam device, comprising:
a cam unit that includes a rotating body and a cam,
the rotating body including a cam follower,
the cam including a cam surface that engages with the cam follower,
the cam configured to rotate the rotating body by rotation of the cam;
a reduction unit
that is provided between a motor and the cam and
that includes a motor gear and a cam gear,
the motor gear being mounted on a motor side of the reduction unit,
the cam gear being mounted on a cam side of the reduction unit; and
a housing that includes a first housing part and a second housing part as a unit,
the first housing part accommodating the cam unit,
the second housing part accommodating the reduction unit.

2. A cam device according to claim 1, wherein
the motor gear is mounted on a motor gear shaft connected to the motor,
the motor facing the motor gear in an axial direction of the motor,
the cam device further comprises a bearing that is for supporting the motor gear shaft, and
the bearing supports the motor gear shaft and the motor gear.

3. A cam device, comprising:
a cam unit that includes a rotating body and a cam,
the rotating body including a cam follower,
the cam including a cam surface that engages with the cam follower,
the cam configured to rotate the rotating body by rotation of the cam;
a coupling
that is provided between a motor and the cam and
that is for coupling the motor and the cam; and
a housing that includes a first housing part and a second housing part as a unit,
the first housing part accommodating the cam unit,
the second housing part accommodating the coupling.

4. A cam device according to any one of claims 1 to 3, wherein
the first housing part is rectangular when viewed from an axial direction of rotation of the rotating body, and
the second housing part is constituted by an extending part that extends from the first housing part outwards in an axial direction of rotation of the cam.

5. A method for manufacturing a cam device,
the method being for manufacturing selectively a cam device having a high reduction ratio and a cam device having a low reduction ratio,
the method comprising:
accommodating a cam unit in a first housing part of a housing,
the cam unit including a rotating body and a cam,
the rotating body including a cam follower,
the cam including a cam surface that engages with the cam follower,
the cam configured to rotate the rotating body by rotation of the cam,
the housing including the first housing part and a second housing part as a unit; and
when manufacturing the cam device having the high reduction ratio,
connecting a reduction unit to the cam unit with being accommodated in the second housing part,
the reduction unit being provided between a motor and the cam and
the reduction unit including a motor gear and a cam gear,
the motor gear being mounted on a motor side of the reduction unit,
the cam gear being mounted to on a cam side of the reduction unit; and
when manufacturing the cam device having the low reduction ratio,
connecting a coupling to the cam unit with being accommodated in the second housing part,
the coupling being provided between a motor and the cam and
the coupling being for coupling the motor and the cam.

6. A method for manufacturing a cam device according to claim 5, wherein
the first housing part is rectangular when viewed from an axial direction of rotation of the rotating body, and
the second housing part is constituted by an extending part that extends from the first housing part outwards in an axial direction of rotation of the cam.
